# NEUE EUROPÄISCHE PATENTSCHRIFT

(11) **EP 0 424 659 B2**
(45) Veröffentlichungstag und Bekanntmachung des Hinweises auf die Entscheidung über den Einspruch: **03.09.1997**
(45) Hinweis auf die Patenterteilung: 15.06.1994
(21) Anmeldenummer: 90117717.0
(22) Anmeldetag: 14.09.1990
(51) Int. Cl.: G01L 5/28

(54) **Verfahren zum Prüfen der Bremsen auf Bremsprüfständen für Kraftfahrzeuge und Vorrichtung zur Durchführung des Verfahrens**
Method for testing brakes on brake testing stands for motorvehicles and device for using the method
Méthode pour tester les freins sur des bancs d'essai à frein de véhicules moteur et dispositif pour mise en oeuvre de la méthode

(30) Priorität: 24.10.1989 DE 3935378
(43) Veröffentlichungstag der Anmeldung: 02.05.1991
(73) Patentinhaber: ROBERT BOSCH GMBH, 70442 Stuttgart (DE)
(72) Erfinder: Dinkelacker, Walter, Dipl.-Phys., D-7000 Stuttgart 61 (DE)

(56) Entgegenhaltungen:
- DE-A- 3 641 339
- DE-A- 3 701 020
- DE-C- 3 603 508

## Beschreibung

Die Erfindung geht aus von einem Verfahren zum Prüfen der Bremsen auf Bremsprüfständen für Kraftfahrzeuge nach dem Oberbegriff des Anspruchs 1. Ferner bezieht sich die Erfindung auf eine Vorrichtung nach dem Oberbegriff des Anspruchs 7.

Aus der DE 36 03 508 C2 ist bereits ein Verfahren sowie eine Vorrichtung zum Prüfen der Bremsen auf Bremsprüfständen für Kraftfahrzeuge bekannt, die sich zur Messung der Bremswirkung bei Allradfahrzeugen eignet, bei denen die beiden angetriebenen Achsen durch eine feste Kupplung miteinander verbunden sind, zum Beispiel über eine Viscokupplung, und somit die zu prüfende Achse nicht abkuppelbar ist. Bei der Prüfung von Allradfahrzeugen, bei denen die zweite ungeprüfte Achse fest auf dem Erdboden steht, werden die Räder der zu prüfenden Achse gegenläufig angetrieben. Um dabei zu vermeiden, daß bei ungleicher Bremskraft Kräfte auf die Viscokupplung und damit auf die Kardanwelle übertragen werden, welche das Meßergebnis verfälschen könnten, wird hier vorgeschlagen, die Drehzahldifferenz beider angetriebenen Räder zu Null zu machen. Ferner ist hier entsprechend den beiden Rädern einer Achse für jede Seite ein gesonderter Pl-Regler vorgesehen. Von Nachteil kann es nun sein, daß es zur Gleichhaltung der Raddrehzahlen einer exakten Drehzahlregelung bedarf, die mit einigem Aufwand verbunden ist und im ganzen Betriebsbereich durchzuführen ist. Besonders bei hohen Leistungen kann diese Bauweise teuer werden.

In Weiterbildung dieses vorbekannten Verfahrens und der Vorrichtung ist aus der DE 36 41 339 A1 bekannt, die über eine an den Rädern anliegende Tastrolle ermittelte Drehgeschwindigkeit der angetriebenen Räder für eine noch genauere Drehzahlregelung dahingehend zu ergänzen, daß zusätzlich noch der Raddrehwinkel beider Räder gemessen und für die Nachregelung berücksichtigt wird. Dabei werden die Istwerte von beiden Seiten in einem gemeinsamen Mikroprozessor verarbeitet und jeweils über einen A/D-Wandler in den Drehzahlregelkreis jeder Seite eingeführt. Für diese Bauweise, mit der die durch Schlupf bedingten Meßfehler ausgeschaltet werden sollen, wird der Regelaufwand besonders hoch, insbesondere dann, wenn zusätzliche Adaptionen erforderlich werden, z.B. lichtoptische Drehzahlmessung für die Ermittlung der direkten Raddrehzahl.

Ferner ist aus der DE 37 01 020 A1 ein Verfahren zur Überprüfung des Zustandes der Bremsen eines Kraftfahrzeuges mit Allradantrieb bekannt, bei dem u.a. die maximalen Werte der bei kurzzeitiger Betätigung des Bremspedales bewirkten Änderungen der Anzeige der Kraftmesser der beiden Elektromotore miteinander verglichen werden. Dabei handelt es sich um eine Relativmessung, die in der Werkstattpraxis ausreichen soll, um ohne besondere Ausbildung die Bremsen eines Kraftfahrzeugs zu testen und so einzustellen, daß die Bremsleistung aller vier Räder etwa übereinstimmt.

### Vorteile der Erfindung

Das erfindungsgemäße Verfahren und die Vorrichtung zum Prüfen der Bremsen auf Bremsprüfständen für Kraftfahrzeuge mit den kennzeichnenden Merkmalen des Anspruchs 1 bzw. Anspruchs 7 hat demgegenüber den Vorteil, daß damit Messungen der Bremswirkung ohne störenden Einfluß der nicht abkuppelbaren Achse möglich sind, wobei der Aufwand relativ gering ist. Dabei wird davon ausgegangen, die Summe der Antriebsleistungen auf ein Minimum zu steuern und die so ermittelten Leistungen während der Messung beizubehalten, so daß kein ständiges Nachregeln erforderlich ist. Bei dem erfindungsgemäßen Verfahren und der Vorrichtung kann daher der Regelungsaufwand erheblich reduziert werden, wobei sogar eine reine Steuerung ganz ohne Regelung möglich ist. Dadurch ist es auch möglich, auf das Anbringen von Geberelementen an den Rädern des Fahrzeugs selbst zu verzichten. Durch die in den abhängigen Ansprüchen aufgeführten Maßnahmen sind vorteilhafte Weiterbildungen und Verbesserungen des im Anspruch 1 angegebenen Verfahrens bzw. der im Anspruch 7 angegebenen Vorrichtung möglich.

Ein besonders günstiges Verfahren ergibt sich gemäß den Ansprüchen 2 und 3 indem bei einem Vortest das Verhältnis derjenigen Antriebsleistungen ermittelt wird, bei dem über die Kardanwelle kein Leistungsabfluß erfolgt und diese Antriebsleistungen anschließend für die Bremsenprüfung verwendet werden, wobei alle störenden Einflüsse, wie Reifenabnutzung, Schlupf und ähnliches berücksichtigt werden. Ferner ergibt sich ein günstiges Verfahren gemäß Anspruch 4 dann, wenn im Bremsprüfstand ohnedies ein Rechner zur Verfügung steht. Fernerhin ist es vorteilhaft, wenn gemäß Anspruch 5 eine elektrische Leistungsermittlung durchgeführt wird, da hierbei vollständig auf Drehzahlgeber verzichtet werden kann. Weitere vorteilhafte Ausgestaltungen ergeben sich aus der Beschreibung.

### Zeichnung

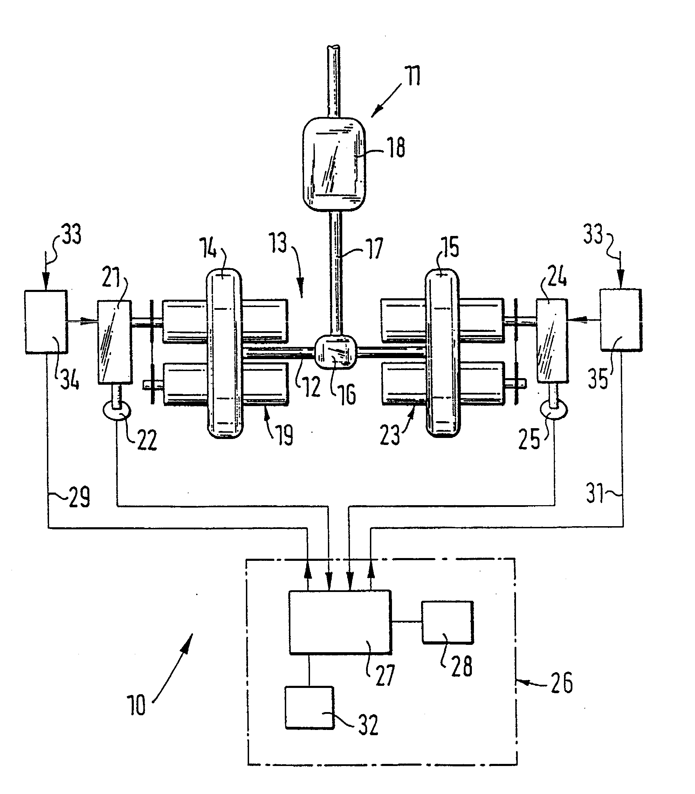

Ein Ausführungsbeispiel der Erfindung ist in der Zeichnung dargestellt und in der nachfolgenden Beschreibung näher erläutert. Die einzige Figur zeigt eine vereinfachte Draufsicht auf einen Bremsprüfstand während einer Bremsprüfung.

### Beschreibung des Ausführungsbeispiels

Die Figur zeigt eine Vorrichtung 10 zum Prüfen der Bremsen auf Bremsprüfständen für Kraftfahrzeuge, bei der ein Fahrzeug 11 mit seiner Hinterachse 12 auf einem Bremsprüfstand 13 steht. Bei dem Fahrzeug 11 handelt es sich um ein solches mit Allradantrieb, bei dem die beiden Räder 14, 15 der Hinterachse 12 über ein Differential 16 mit einer Kardanwelle 17 verbunden sind, in die eine Viscokupplung 18 geschaltet ist. Die Kardanwelle 17 steht in an sich bekannter und nicht näher gezeichneter Weise in untrennbarer Weise mit einer Vorderachse in Verbindung, die über ein Getriebe von einem Fahrzeugmotor antreibbar ist. Das Fahrzeug 11 steht mit seiner nicht gezeichneten Vorderachse auf dem Erdboden. Die zwischengeschaltete Viscokupplung 18 hat die Eigenschaft, daß sie geringfügige Drehzahlunterschiede zwischen den beiden Teilen der Kardanwelle 17 ausgleichen kann, sich jedoch bei größeren Drehzahldifferenzen wie eine starre Kupplung verhält.

Das linke Hinterrad 14 steht im Bremsprüfstand 13 auf einem Rollensatz 19, wobei die beiden Rollen dieses Rollensatzes 19 getriebemäßig miteinander verbunden sind. Der linke Rollensatz 19 wird von einem ersten Antriebsmotor 21 angetrieben, der in an sich bekannter Weise gelenkig aufgehängt ist und sich mit seinem freien Ende auf einer Meßdose 22 abstützt. Die Prüfung der Bremskraft selbst erfolgt durch Messung des Rückdrehmomentes, das beim Bremsen am Antriebsmotor 21 auftritt und über die Meßdose 22 als Signal abfragbar ist, wie dies an sich bekannt ist. In entsprechender Weise steht das rechte Rad 15 auf einem rechten Rollensatz 23, dessen beide Rollen ebenfalls getriebsmäßig verbunden sind und der von einem entsprechenden zweiten Antriebsmotor 24 antreibbar ist, dessen Rückdrehmoment über eine Meßdose 25 erfaßt wird, die zusammen mit der anderen Meßdose 22 eine Meßeinrichtung bildet.

Die Vorrichtung 10 weist eine zur Bedienung des Bremsprüfstandes 13 dienende Steuereinrichtung 26 auf, die im wesentlichen aus elektrischen und elektronischen Bauelementen besteht und welche die Eingangs- und Ausgangssignale so verarbeitet und speichert, daß mit ihr die Summe der Antriebsleistungen der Antriebsmotoren 21 und 24 auf ein Minimum steuerbar ist. Ein Steuergerät 27 erhält zu diesem Zweck die Signale der Meßdosen 22, 25, aus denen es die Bremskräfte ermittelt und daraus zusammen mit der Rollendrehzahl die Bremsleistung ab-leitet und an ein Anzeigegerät 28 weitergibt, wo eine Bedienungsperson die Werte ablesen kann. Zur Ansteuerung der Antriebsmotoren 21, 24 ist das Steuergerät 27 ferner über elektrische Leitungen 29 und 31 mit den Stromversorgungsgeräten 34 und 35 (z.B. Thyristorsatz oder Steuertrafo) verbunden, die die beiden Antriebsmotoren mit elektrischer Leistung speisen. Ferner ist an das Steuergerät 27 ein Eingabegerät 32 angeschlossen, mit dem die unterschiedlichen Funktionen vorwählbar sind. Die Energieversorgung aus einem Netz erfolgt jeweils über einen Anschluß 33.

Die Wirkungsweise der Vorrichtung 10 und des zugehörigen Verfahrens zum Prüfen der Bremsen auf Bremsprüfständen für Kraftfahrzeuge wird wie folgt erläutert, wobei nur soweit darauf eingegangen wird, als zum Verständnis der Erfindung notwendig ist:
Beim Betrieb der Vorrichtung 10 werden im Bremsprüfstand 13 die beiden Rollenpaare 19 und 23 so angetrieben, daß die Räder 14, 15 der Hinterachse 12 gegenläufig angetrieben werden. Im Betrieb fließt dabei aus dem elektrischen Netz Leistung über den Anschluß 33, das Steuergerät 27 und die Leitungen 29 bzw. 31 zu dem linken (21) bzw. rechten Antriebsmotor 24, die als Antriebsleistung P_{Ml} und P_{Mr} bezeichnet wird. Beim Betätigen der nicht gezeichneten Bremsanlage auf dem Fahrzeug 11 wird von den beiden Rollensätzen 19, 23 Leistung auf das iinke Rad 14 bzw. das rechte Rad 15 übertragen. Dabei wird von der Radbremse am linken Rad 14 die Bremsleistung P_{Bl} und am rechten Rad 15 die Bremsleistung P_{Br} aufgenommen. Ferner werden Leistungsanteile P_{Al} und P_{Ar} in die Achse 12 übertragen und auch teilweise in die Kardanwelle 17 geleitet. Diese in die Kardanwelle 17 gelangende Verlustleistung P_{K} wird wegen Stillstand der anderen, auf dem Boden stehenden Vorderachse in der Viscokupplung 18 in Wärme umgesetzt. Die dadurch erzeugte Rückwirkung verfälscht die Messung der Bremsenwirkung. Es muß daher verhindert werden, daß bei der Bremsprüfung eine die Messung störende Verlustleistung P_{K} auftreten kann.

Das Vermeiden dieser Verlustleistung P_{K} wird in einem ersten Verfahren erfindungsgemäß dadurch erreicht, daß vor der Messung der Bremswirkung jeder Achse, in vorliegendem Fall der Hinterachse 12, in einem gesonderten Vortest bei mittlerer, fester Pedalkraft auf die Bremse die jeweils aufgenommenen Leistungen an den beiden Antriebsmotoren 21, 24 gemessen werden. Anschließend wird durch Variation der Antriebsleistung eines der beiden Antriebsmotore 21, 24 die Summe der Antriebsleistungen P_{Ml} und P_{Mr} zu einem Minimum gemacht. Dabei wird die Erkenntnis ausgenutzt, daß die Summenleistung nur dann ein Minimum aufweist, wenn die Verlustleistung P_{K} in die Kardanwelle 17 zu Null wird. Die bei diesem Minimum ermittelten Größen für die Antriebsleistungen werden von dem Steuergerät 27 festgehalten und bei der darauf anschließenden Bremsenprüfung kann mit ihnen der Bremsenprüfstand 13 betrieben werden. Die Bremsenprüfung kann nun mit hohen und/oder niedrigen Pedaldrücken durchgeführt werden, wobei das einmal ermittelte Leistungsverhältnis beibehalten wird. Störende Einflüsse auf die Messung der Bremswirkung infolge von unterschiedlichem Schlupf oder unterschiedlich großer Bremswirkung an den beiden Rädem 14, 15 werden somit ausgeschaltet. Die Bremsenprüfung kann vielmehr ohne Abfluß von Leistung in die Kardanwelle 17 erfolgen, wobei die so ermittelten Antriebsleistungen für die Antriebsmotoren 21, 24 während der Messung beibehalten werden, so daß auch keine ständige Nachregelung erfolgen muß.

Die Leistungsmessung kann hierbei vorteilhaft auf elektrische Weise geschehen, indem die elektrische Leistung P gebildet wird aus dem Produkt einer Spannungsgröße V, der Stromgröße A und dem Phasenwinkel cos φ. Diese Größen können vom Steuergerät 27 in einfacher Weise ermittelt werden, wobei die Leistungsanzeige am Anzeigegerät 28 vorgenommen wird. Bei diesem ersten Verfahren kann in einfacher Weise so vorgegangen werden, daß mit Hilfe des Eingabegeräts 32 zum Beispiel die Antriebsleistung am rechten Antriebsmotor 24 konstant gehalten wird, während anfangs gleichzeitig der linke Antriebsmotor 21 mit einer gleich großen oder geringfügig kleineren elektrischen Leistung beaufschlagt wird. Anschließend wird zur Minimierung der Summenleistung die Antriebsleistung am linken Motor 21 erhöht, wobei die Bedienungsperson am Anzeigegerät 28 gleichzeitig verfolgen kann, ob sich die Summenleistung zugleich reduziert. Die Leistung am linken Antriebsmotor 21 wird dabei solange erhöht, bis das am Anzeigegerät 28 ablesbare Minimum der Summenleistung beider Antriebsmotoren 21, 24 erreicht ist. Mit den so ermittelten Leistungen kann dann die Bremsprüfung durchgeführt werden. Sollte sich hierbei beim anfänglichen Ansteuem des linken Antriebsmotors 21 zeigen, daß beim Erhöhen der Antriebsleistung am Motor 21 sich auch die Summenleistung erhöht, so muß die Bedienungsperson in die entgegengesetzte Richtung steuern und bei konstanter Leistung für den rechten Antriebsmotor 24 die Leistung für den linken Antriebsmotor 21 verringern, bis auf diese Weise die Summenleistung zu einem Minimum wird. Eine bevorzugte Ausführung wird sein, beide Antriebsmotoren über Thyristorsätze anzusteuern und jeweils den Antriebsmotor, der die höhere Leistung zu erbringen hat direkt ans Netz zu legen und beim anderen die Aufnahmeleistung soweit zu reduzieren bis Summenleistung - Minimum erreicht ist. Zur Erkennung, welcher Antriebsmotor zurückzuregeln ist, kann der Drehsinn der Kardanwelle verwendet werden oder das Drehzahlverhältnis der Antriebsmotoren.

In einem zweiten Verfahren zur Bremsenmessung in Allradfahrzeugen wird erfindungsgemäß so vorgegangen, daß die Messung in zwei Stufen durchgeführt wird. Dabei wird in einer ersten Verfahrensstufe, wenn die beiden Räder 14, 15 gegenläufig angetrieben werden und die Bremse mit einer mittleren, konstanten Pedalkraft betätigt ist, die Summenleistung der beiden Antriebsmotoren 21, 24 ermittelt und festgehalten. Zugleich werden vom Steuergerät 27 auch die einzelnen Leistungen der Antriebsmotoren 21, 24 gemessen und festgehalten. Anschließend wird in einer zweiten Verfahrensstufe so vorgegangen, daß bei konstant bleibender Leistung des einen Antriebsmotors 24 die Antriebsleistung des anderen Antriebsmotors 21 so verändert wird, daß die Summenleistung abnimmt und schließlich ein Minimum erreicht, um dann anschließend wieder zuzunehmen und schließlich den gleichen Wert zu erreichen, wie die Summenleistung in der ersten Verfahrensstufe. Auch am Ende der zweiten Verfahrensstufe werden die Summenleistung sowie die einzelnen Antriebsleistungen der Motoren 21, 24 gemessen und festgehalten. Der Vorteil der Einstellung zweier gleich großer Summenleistungen mit dazwischenliegendem Minimum liegt in der höheren Genauigkeit der Ermittlung des Minimums, da die Summenleistung (Pₗ + Pᵣ) am ersten Meßpunkt und die Summenleistung (Pₗ + Pᵣ) am zweiten Meßpunkt in der Praxis nur nahezu symmetrisch zum Minimum liegen und die Anderung von (Pₗ + Pᵣ) in der Nähe des Minimums kleiner ist. Die Verlustleistung P_{K} nimmt mit Drehzahlverhältnissen nᵣ/nₗ ≠ 1 progressiv zu. Das Minimum muß nicht genau bei nᵣ/nₗ = 1, also nᵣ = nₗ liegen, da der Schlupf beider Reifen auf der jeweiligen Rolle unterschiedlich sein kann. Auch kann das Steuergerät 27 die betreffenden Leistungswerte in dem Punkt ermitteln, wo die Summenleistung ihr Minimum aufweist. Auf diese Weise führen die Messungen in beiden Verfahrensstufen zur gleichen Verlustleistung P_{K} in der Kardanwelle 17, die nun im Steuergerät 27 rechnerisch eliminiert werden kann. Bei diesem zweiten Verfahren wird von der Tatsache Gebrauch gemacht, daß die Bremskräfte der beiden Bremsen in einem kleinen Drehzahlbereich weitgehend unabhängig von der Drehzahl sind. Wenn die Bedienungsperson am Beginn der ersten Verfahrensstufe bemerkt, daß sich beim Ändern der Antriebsleistung am linken Antriebsmotor 21 die Summenleistung erhöhen sollte, so muß er lediglich die Leistungsgröße in der umgekehrten Richtung steuern, zum Beispiel anstelle einer Vergrößerung eine Verminderung dieser Größe ansteuern. Auch bei diesem Verfahren fließt in dem Punkt, wo die Summenleistung ihr Minimum erreicht, keine Verlustleistung in die Kardanwelle 17 bzw. die Viscokupplung 18, so daß die Kardanwelle 17 stillsteht. In den Bereichen vor und hinter dem Summenleistungs-Minimum ergibt sich für die Kardanwelle 17 eine Drehrichtungsumkehr.

Selbstverständlich sind an den aufgezeigten Verfahren und den zugehörigen Vorrichtungen Änderungen möglich, ohne von der Erfindung abzuweichen. So kann anstelle der elektrischen Leistungsmessung auch eine mechanische Lösung verwendet werden, indem die jeweiligen Antriebsleistungen der Motoren 21 und 24 aus dem Produkt aus Drehmoment und Drehzahl ermittelt werden und dann zusammen die Summenleistung ergeben. Für das Drehmoment können die Signale der Meßdosen 22, 25 verwendet werden, während für die Drehzahl zusätzliche, gesonderte Drehzahlgeber erforderlich werden, die in an sich bekannter Weise an den Rollensätzen 19 und 23 angebracht werden können. Fernerhin ist es auch möglich, die Verfahren weitgehend zu automatisieren, wobei der Steuereinrichtung 26 Signale über den Drehsinn und/oder die Drehzahl der Kardanwelle 17 zugeführt werden, die davon abhängig die Verfahrensabläufe in der Vorrichtung 10 steuern kann. Obwohl sich die Vorrichtung 10 besonders dafür eignet, die bei der Bremsenprüfung von Allradfahrzeugen mit unlösbar gekoppelten Antriebsachsen auftretenden Probleme mit einfachen und preiswerten Steuerkreisen durchzuführen, ist es nicht ausgeschlossen, in der Vorrichtung 10 Regelkreise anzuwenden, insbesondere zum Regeln der Antriebsleistungen der Antriebsmotoren 21 und 24.

## Patentansprüche

1. Verfahren zum Prüfen der Bremsen auf Bremsprüfständen für Kraftfahrzeuge mit mehreren vom Fahrzeugmotor angetriebenen Achsen, wobei die Achse (12) der zu prüfenden Bremse nicht abkuppelbar ist und bei dem die von Rollensätzen (19, 23) des Bremsprüfstandes während des Prüfvorgangs jeweils von einem gesonderten Antrieb (21, 24) gegenläufig angetriebenen Räder (14, 15) zumindest einer Achse (12) beim Prüfvorgang abgebremst werden und die Bremswirkung einer Bremse jeweils von einer Meßeinrichtung (22, 25) am Antrieb des Rollensatzes (19, 23) dieses Rades (14, 15) erfaßt wird, dadurch gekennzeichnet, daß durch Änderung der Leistung wenigstens am Antrieb (21, 24) eines der Rollensätze (19, 23) die Summenleistung der beiden Antriebe (21,24) ermittelt und auf ein Minimum gebracht wird, bei dem der Leistungsabfluß zur unlösbar gekoppelten Achse (17, 18) mindestens nahezu zu Null wird und daß davon abhängig die Messung der Wirkung der Bremse durchgeführt wird.

2. Verfahren nach Anspruch 1, dadurch gekennzeichnet, daß in einer ersten Stufe bei einer definierten Pedalkraft an der Bremse des Fahrzeuges (11) der Bremsprüfstand (13) betrieben und durch Steuerung bzw. Regelung der Summenleistung auf ein Minimum die Antriebsleistung an jedem Antrieb (21, 24) der beiden Rollensätze (19, 23) ermittelt und festgehalten wird und daß in einer zweiten Stufe während des Prüfvorgangs der Bremse die Antriebe (21, 24) beider Rollensätze (19, 23) jeweils mit den zuvor ermittelten, zugehörigen Antriebsleistungen betrieben werden.

3. Verfahren nach Anspruch 2, dadurch gekennzeichnet, daß einer der Antriebe (24, 21) während des Prüfvorgangs mit gleichbleibender Leistung angetrieben wird, während der andere Antrieb (21, 24) anfangs mit einer demgegenüber geringfügig kleineren Leistung angetrieben wird, wonach durch Erhöhen der Leistung am anderen Antrieb (21, 24) das Minimum der Summenleistung ermittelt wird.

4. Verfahren nach Anspruch 1, dadurch gekennzeichnet, daß in einer ersten Stufe bei einer definierten Pedalkraft an der Bremse des Fahrzeuges (11) der Bremsprüfstand (13) mit wenigstens nahezu gleichgroßen Antriebsleistungen betrieben wird, wobei neben den einzelnen Leistungen die Summenleistung beider Antriebe (21, 24) gemessen und festgehalten wird und daß danach in einer zweiten Stufe die Leistung mindestens eines Antriebs (21, 24) so verändert wird, daß die Summenleistung bis zu einem Minimum abnimmt und danach wieder den in der ersten Stufe ermittelten Wert erreicht, wobei beide einzelnen Leistungen und die Summenleistung ermittelt werden und daß aus diesen Werten, insbesondere in Verbindung mit den Werten für das Summenleistungs-Minimum, die Bremswirkung unverfälscht von Einflüssen der unlösbar gekoppelten Achse ermittelt wird.

5. Verfahren nach einem oder mehreren der Ansprüche 1 bis 4, dadurch gekennzeichnet, daß die Leistung der Antriebe (21, 24) auf elektrische Weise (29, 31, 27) ermittelt wird, insbesondere aus den den Antrieben (21, 24) zugeführten Strom- und Spannungswerten.

6. Verfahren nach einem oder mehreren der Ansprüche 1 bis 4, dadurch gekennzeichnet, daß die Leistung der Antriebe (21, 24) auf mechanische Weise ermittelt wird, insbesondere aus den am Prüfstand ermittelten Drehmomenten. und den zugehörigen Drehzahlen der Antriebsrollen.

7. Vorrichtung zur Durchführung des Verfahrens zur Prüfung der Bremsen auf Bremsprüfständen für Kraftfahrzeuge nach Anspruch 1, mit mehreren vom Fahrzeugmotor angetriebenen Achsen, wobei die Achse (12) der zu prüfenden Bremse nicht abkuppelbar ist und bei der die von Rollensätzen (19, 23) des Bremsprüfstandes (13) während des Prüfvorgangs jeweils von einem gesonderten Antrieb (21, 24) gegenläufig angetriebenen Räder (14, 15) zumindest einer Achse (12) beim Prüfvorgang abgebremst werden und die Bremswirkung einer Bremse jeweils von einer Meßeinrichtung (22, 25) am Antrieb des Rollensatzes (19, 23) dieses Rades (14, 15) erfaßt wird, dadurch gekennzeichnet, daß eine Steuereinrichtung (26) vorhanden ist, mit der die Summe der Antriebsleistungen (P_{Ml}, P_{Mr}) auf ein Minimum steuerbar und die dabei ermittelten Werte für Antriebsleistung und Summenleistung meß- und feststellbar und für die Messung der Bremswirkung verwendbar sind.

8. Vorrichtung nach Anspruch 7, dadurch gekennzeichnet, daß die Steuereinrichtung (26) Mittel aufweist, um mit den bei minimaler Summenleistung ermittelten Werten der einzelnen Antriebsleistungen (P_{Ml}, P_{Mr}) die beiden Antriebe (21, 24) der Rollensätze (19, 23) während den Bremsprüfungen anzusteuern.

9. Vorrichtung nach Anspruch 7, dadurch gekennzeichnet, daß die Steuereinrichtung (26) Mittel aufweist, mit denen aus den einzelnen Antriebsleistungen und den gleich großen Summenleistungen jeweils vor und nach dem Durchfahren eines Summenleistungs-Minimums die Bremswirkung einer Bremse störungsfrei ermittelbar ist.

10. Vorrichtung nach Anspruch 9, gekennzeichnet durch die Verwendung eines Rechners in einem Steuergerät (27), wobei letzteres ein Teil der Steuereinrichtung (26) ist.

## Claims

1. Method for testing brakes on brake testing stands for motor vehicles with a plurality of axles driven by the engine of the vehicle, the axle (12) of the brake to be tested being incapable of being decoupled, and in which method the wheels (14, 15), driven in opposite directions by sets of rollers (19, 23) of the brake testing stand during the testing process in each case by a separate drive (21, 24), of at least one axle (12) are braked during the testing process and the braking effect of one brake is detected in each case by one measuring device (22, 25) at the drive of the set of rollers (19, 23) of this wheel (14, 15), characterized in that by changing the power at least at the drive (21, 24) of one of the sets of rollers (19, 23) the total power of the two drives (21, 24) is determined and reduced to a minimum at which the power discharge to the non-detachably coupled axle (17, 18) becomes at least virtually zero, and in that the measurement of the effect of the brake is carried out as a function thereof.

2. Method according to Claim 1, characterized in that, in a first stage, the brake testing stand (13) is operated at a defined pedal force at the brake of the vehicle (11) and by controlling the total power to a minimum in an open-loop or closed-loop manner the drive power at each drive (21, 24) of the two sets of rollers (19, 23) is determined and maintained, and in that, in a second stage, the drives (21, 24) of the two sets of rollers (19, 23) are each operated during the testing process of the brake with the previously determined, associated drive powers.

3. Method according to Claim 2, characterized in that one of the drives (24, 21) is driven during the testing process at constant power whilst the other drive (21, 24) is driven initially at a power which is slightly smaller in contrast with the above, after which the minimum of the total power is determined by increasing the power at the other drive (21, 24).

4. Method according to Claim 1, characterized in that, in a first stage, the brake testing stand (13) is operated at at least virtually the same drive powers with a defined pedal force at the brake of the vehicle (11), in which case, in addition to the individual powers, the total power of the two drives (21, 24) is measured and maintained, and in that subsequently, in a second stage, the power of at least one drive (21, 24) is changed in such a way that the total power is reduced to a minimum and subsequently reaches again the value determined in the first stage, both individual powers and the total power being determined, and in that the braking effect is determined from these values, in particular in conjunction with the values for the minimum total power, without falsification by influences of the non-detachably coupled axle.

5. Method according to one or more of Claims 1 to 4, characterized in that the power of the drives (21, 24) is determined in an electric manner (29, 31, 27), in particular from the current and voltage values fed to the drives (21, 24).

6. Method according to one or more of Claims 1 to 4, characterized in that the power of the drives (21, 24) is determined in a mechanical manner, in particular from the torques determined at the testing stand and the associated speeds of revolution of the drive rollers.

7. Device for carrying out the method for testing brakes on brake testing stands for motor vehicles according to Claim 1, with a plurality of axles driven by the engine of the vehicle, the axle (12) of the brake to be tested being incapable of being decoupled, and in which device the wheels (14, 15), driven in opposite directions by sets of rollers (19, 23) of the brake testing stand (13) during the testing process in each case by a separate drive (21, 24), of at least one axle (12) are braked during the testing process and the braking effect of one brake is detected in each case by one measuring device (22, 25) at the drive of the set of rollers (19, 23) of this wheel (14, 15), characterized in that a control device (26) is present, with which device the total of the drive powers (P_{Ml}, P_{Mr}) can be controlled to a minimum and the values for drive power and total power which are determined during this process can be measured and fixed and can be used for measuring the braking effect.

8. Device according to Claim 7, characterized in that the control device (26) has means for driving the two drives (21, 24) of the sets of rollers (19, 23) during the brake tests with the values, determined at minimum total power, of the individual drive powers (P_{Ml}, P_{Mr}).

9. Device according to Claim 7, characterized in that the control device (26) has means with which the braking effect of a brake can be determined free of interference from the individual drive powers and the total powers of the same size in each case before and after a minimum total power is passed through.

10. Device according to Claim 9, characterized by the use of a computer in a control device (27), the latter being part of the control device (26).

## Revendications

1. Procédé de contrôle des freins sur des bancs d'essai de freins pour véhicules automobiles comportant plusieurs essieux entraînés par le moteur du véhicule, l'essieu (12) des freins à contrôler n'étant pas dissociable, et selon lequel les roues (14, 14) d'au moins un essieu (12) et qui sont entraînées en sens opposé par les jeux de rouleaux (19, 23) du banc d'essai, pendant le contrôle, chaque fois par un moyen d'entraînement particulier (21, 24), sont freinées au cours de l'opération de contrôle et l'effet du freinage d'un frein est détecté respectivement par une installation de mesure (22, 25) sur l'entraînement du jeu de rouleaux (19, 23) de cette roue (14, 15),
caractérisé en ce qu'
en modifiant la puissance d'au moins un moyen d'entraînement (21, 24) de l'un des jeux de rouleaux (19, 23), on détermine la puissance totale des deux moyens d'entraînement (21, 24), et on met à un minimum pour lequel la sortie de puissance vers l'essieu couplé de manière non dissociable (17, 18) est pratiquement nulle et en fonction de cela on mesure l'effet des freins.

2. Procédé selon la revendication 1,
caractérisé en ce que
dans une première étape, pour une force de pédale déterminée, appliquée sur le frein du véhicule (11), on fait fonctionner le banc d'essai (13) et la commande ou la régulation de la puissance totale à un minimum, on détermine la puissance motrice de chaque moyen d'entraînement (21, 24) des deux jeux de rouleaux (19, 23) et on enregistre et en ce qu'au cours d'une seconde étape, pendant l'opération de contrôle des freins, on fait fonctionner les moyens d'entraînement (21, 24) des deux jeux de rouleaux (19, 23) chaque fois avec les puissances motrices correspondantes, déterminées précédemment.

3. Procédé selon la revendication 2,
caractérisé en ce qu'
on entraîne l'un des moyens d'entraînement (24, 21) pendant l'opération de contrôle, avec une puissance constante pendant que l'autre entraînement (21, 24) est entraîné initialement avec une puissance légèrement plus faible, puis pour augmenter la puissance sur l'autre moyen d'entraînement (21, 24), on détermine le minimum de la puissance totale.

4. Procédé selon la revendication 1,
caractérisé en ce qu'
au cours d'une première étape, pour une force de pédale déterminée appliquée au frein du véhicule (11), on fait fonctionner le banc d'essai de freins (13) avec des puissances d'entraînement au moins approximativement égales et en plus des différentes puissances, on mesure et on enregistre la puissance totale des deux moyens d'entraînement (21, 24) et au cours d'une seconde étape, on modifie la puissance d'au moins un moyen d'entraînement (21, 24) pour que la puissance totale diminue jusqu'à un minimum puis on atteint de nouveau la valeur déterminée au cours de la première étape et on détermine les différentes puissances et la puissance totale et à partir de ces valeurs, notamment en liaison avec les valeurs du minimum de la puissance totale, on détermine l'effet de freinage de manière non faussée par les influences de l'essieu couplé de manière indissociable.

5. Procédé selon l'une ou plusieurs des revendications 1 à 4,
caractérisé en ce qu'
on détermine la puissance des moyens d'entraînement (21, 24) de manière électrique (29, 31, 27) notamment à partir des intensités et tensions du courant alimentant les moyens d'entraînement (21, 24).

6. Procédé selon l'une ou plusieurs des revendications 1 à 4,
caractérisé en ce qu'
on détermine la puissance des moyens d'entraînement (21, 24) de manière mécanique notamment à partir des couples déterminés dans le poste de contrôle et des vitesses de rotation correspondantes des rouleaux d'entraînement.

7. Dispositif pour la mise en oeuvre du procédé de contrôle des freins dans des bancs d'essai de freins de véhicules automobiles selon la revendication 1,
ayant plusieurs essieux entraînés par le moteur du véhicule, essieux (12) du frein à contrôler ne pouvant être dissociés et les roues (14, 15) entraînées en sens opposé par un moyen d'entraînement particulier (21, 24) par les jeux de rouleaux (19, 23) du banc d'essai de freins (13) pendant un contrôle et appartenant au moins à un essieu (12) sont freinées pendant le contrôle et l'effet de freinage d'un frein est détecté respectivement par une installation de mesure (22, 25) à l'entraînement du jeu de rouleaux (19, 23) de cette roue (14, 15),
caractérisé par
une installation de commande (26) qui règle la somme des puissances motrices (P_{Ml}, P_{Mr}) à un minimum et utilise les valeurs ainsi déterminées, de la puissance motrice et de la somme des puissances qui se mesurent et se constatent, pour mesurer l'effet de freinage.

8. Dispositif selon la revendication 7,
caractérisé en ce que
l'installation de commande (26) comporte des moyens pour commander avec les valeurs obtenues pour la puissance totale minimale, pour les différentes puissances d'entraînement (P_{Ml}, P_{Mr}) les deux moyens d'entraînement (21, 24) des jeux de rouleaux (19, 23) pendant les contrôles de freins.

9. Dispositif selon la revendication 7,
caractérisé en ce que
l'installation de commande (26) comporte des moyens à l'aide desquels à partir des différentes puissances d'entraînement et des puissances totales égales, on détermine respectivement avant et après le dépassement d'un minimum de la puissance totale, l'effet de freinage sans défaut d'un frein.

10. Dispositif selon la revendication 9,
caractérisé en ce que
l'appareil de commande (27) comporte un calculateur et cet appareil de commande fait partie de l'installation de commande (26).
